# EUROPEAN PATENT APPLICATION

(11) **EP 4 345 996 A2**
(43) Date of publication of application: **03.04.2024**
(21) Application number: 23162975.9
(22) Date of filing: 20.03.2023
(51) Int. Cl.: H01M 50/209

(54) **SECONDARY BATTERY MODULE, BATTERY PACK, AND DEVICE INCLUDING THE SAME**

(30) Priority: 08.09.2022 KR 20220114032
(71) Applicant: SK On Co., Ltd., Seoul 03161 (KR)
(72) Inventor: KIM, Ho Yeon, 34124 Daejeon (KR); LEE, Eung Ho, 34124 Daejeon (KR); JEON, Hae Ryong, 34124 Daejeon (KR)
(74) Representative: Stolmár & Partner Patentanwälte PartG mbB

(57) **Abstract**

A secondary battery includes a battery cell assembly in which a plurality of battery cells and one or more first insulating members are stacked; a second insulating member formed to cover at least a portion of one end of the battery cell assembly in a direction perpendicular to a stacking direction of the battery cells and the one or more first insulating members; an upper case located on the second insulating member; and a fire extinguishing member located between the second insulating member and the upper case.

## Description

### BACKGROUND

### 1. Technical Field

The present disclosure relates to a secondary battery module, a battery pack, and a device including the same.

### 2. Related Art

With the development of the electronics, communications, and space industries, the demand for lithium secondary batteries as an energy power source is rapidly increasing. In particular, as the importance of global eco-friendly policies is emphasized, the electric vehicle market is growing rapidly, and research and development on lithium secondary batteries are being actively conducted.

The lithium secondary battery includes a cathode, an anode, and a separator disposed therebetween, and an active material capable of inserting and extracting lithium ions is provided on the cathode and anode, respectively.

On the other hand, as the need for a large-capacity structure has increased recently, including its use as an energy storage source, demand for a battery module provided with numerous secondary cells electrically connected in series and/or parallel accommodated in a module housing is increasing.

However, in the related art, when each secondary cell among many ignites or explodes, heat or flame is transferred to an adjacent secondary battery and a secondary explosion or the like may occur. Consequently, prevention of secondary ignition or explosion is paramount.

Moreover, there is also the possibility that the flame of the ignited secondary battery may propagate to the adjacent secondary battery through a gas channel formed to discharge gas, and it is necessary to develop a technology that may prevent this.

### SUMMARY

Embodiments provide a new type of secondary battery module, a battery pack, and a device including the same for a thermal propagation situation.

In accordance with an aspect of the present disclosure, there is provided a secondary battery module including a battery cell assembly in which a plurality of battery cells and one or more first insulating members are stacked; a second insulating member formed to cover at least a portion of one end of the battery cell assembly in a direction perpendicular to a stacking direction of the battery cells and the one or more first insulating members; an upper case located on the second insulating member; and a fire extinguishing member located between the second insulating member and the upper case.

In an embodiment of the present disclosure, the first insulating members may be adjacent to one or more of the battery cells in the stacking direction.

In an embodiment of the present disclosure, one or more of the battery cells may be located between the first insulating members different from each other.

In an embodiment of the present disclosure, the second insulating member may be formed to cover at least a portion of one end of the battery cell assembly in a direction perpendicular to a direction in which electrode tabs of the battery cells protrude and the stacking direction.

In an embodiment of the present disclosure, the first insulating member may include one or more materials selected from a group consisting of aerogel, polyurethane, mica, and silica.

In an embodiment of the present disclosure, the second insulating member may include one or more materials selected from a group consisting of silica wool, ceramic wool, and mineral wool.

In an embodiment of the present disclosure, the second insulating member may include a protruding part protruding in a same direction as a direction in which electrode tabs of the battery cells in the battery cell assembly protrude.

In an embodiment of the present disclosure, the protruding part may include a first portion located at an end of the battery cells and a second portion located at an end of the first insulating member and having a longer length than the first portion in the direction in which it protrudes.

In an embodiment of the present disclosure, the protruding part may be spaced apart from the upper case.

In an embodiment of the present disclosure, the secondary battery module may further include an end plate at an end of the battery cell assembly in the stacking direction.

In an embodiment of the present disclosure, the end plate may include a venting hole.

In an embodiment of the present disclosure, a space between the protruding part and the upper case may communicate with an outside of the secondary battery module through the venting hole.

In an embodiment of the present disclosure, the fire extinguishing member may be configured to release a fire extinguishing agent when an internal temperature is higher than a predetermined temperature.

In accordance with an aspect of the present disclosure, there is provided a secondary battery module including a battery cell assembly including a plurality of battery cell stacks and a plurality of first insulating members, the first insulating members being interposed between neighbors of the battery cell stacks; a plurality of second insulating members including a protruding part and partially covering the battery cell assembly; an upper case and a lower case partially covering the battery cell assembly; a plurality of fire extinguishing members extending in the stacking direction of the battery cell stacks and disposed between the upper case and the protruding part.

In accordance with another aspect of the present disclosure, there is provided a battery pack including a battery pack case; and the secondary battery module accommodated in the battery pack case.

In accordance with another aspect of the present disclosure, there is provided a device including the battery pack.

According to the present disclosure, a new type of secondary battery module, a battery pack, and a device including the same for a thermal propagation situation is provided.

### BRIEF DESCRIPTION OF THE DRAWINGS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is an exploded view for explaining a secondary battery module in accordance with an embodiment of the present disclosure.
FIG. 2 is a diagram for explaining a battery cell assembly in a secondary battery module in accordance with an embodiment of the present disclosure.
FIG. 3 is a diagram for explaining a second insulating member in a secondary battery module in accordance with an embodiment of the present disclosure.
FIG. 4 is a diagram for explaining an example of a protruding part included in the second insulating member of FIG. 3.
FIG. 5 is a cross-sectional view of a secondary battery module viewed from the front in accordance with an embodiment of the present disclosure.
FIG. 6 is a front view diagram for a secondary battery module including a fire extinguishing member in accordance with an embodiment of the present disclosure.
FIG. 7 is a diagram for explaining a movement path of gas in a secondary battery module in accordance with an embodiment of the present disclosure.

### DETAILED DESCRIPTION

According to the present disclosure, a secondary battery module includes a battery cell assembly in which a plurality of battery cells and one or more first insulating members are stacked; a second insulating member formed to cover at least a portion of one end of the battery cell assembly in a direction perpendicular to a stacking direction of the battery cells and the first insulating members; an upper case located on the second insulating member; and a fire extinguishing member located between the second insulating member and the upper case is provided.

Hereinafter, the secondary battery module according to an embodiment of the present disclosure will be described in detail for each configuration.

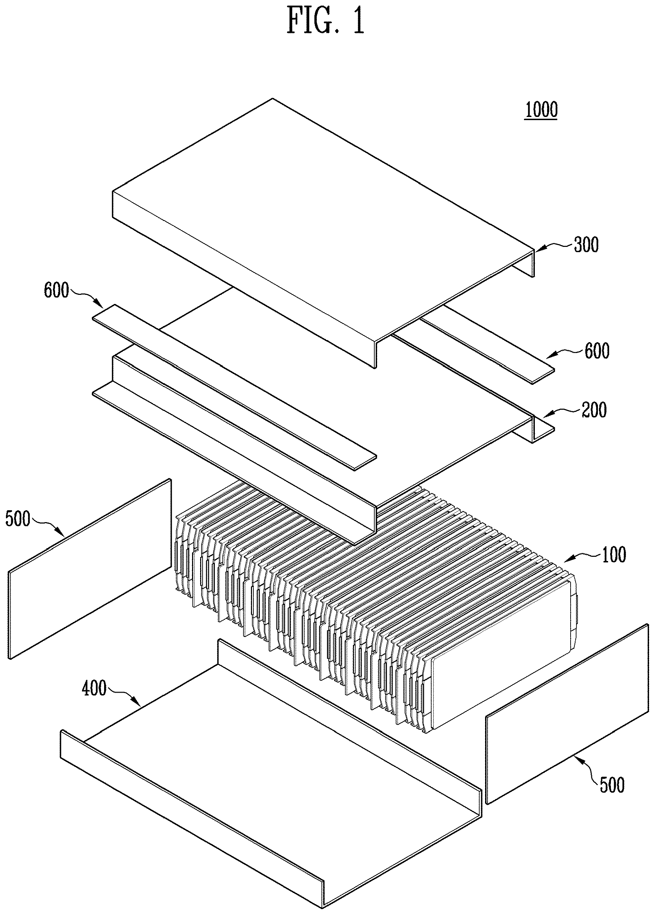

FIG. 1 is an exploded view for explaining a secondary battery module in accordance with an embodiment of the present disclosure.

Referring to FIG. 1, a secondary battery module 1000 may include a battery cell assembly 100, a second insulating member 200, an upper case 300, a lower case 400, and an end plate 500.

The battery cell assembly 100 has a configuration for storing and transmitting electrical energy, and may be formed by stacking a plurality of battery cells and one or more first insulating members. The first insulating members may be adjacent to one or more battery cells in the stacking direction. Here, the configuration where the first insulating member and the battery cell are adjacent to each other may include not only a configuration in which the first insulating member and the battery cell contact each other, but also a configuration in which a component other than the first insulating member is further included between the first insulating member and the battery cell. One or more battery cells may be located between different first insulating members, and one or more battery cells located between different first insulating members may be referred to as a battery cell stack. The battery cell assembly 100 may include a plurality of battery cell stacks. Between the plurality of battery cell stacks, the first insulating member may be located.

The second insulating member 200 may be formed to cover at least a portion of one end of the battery cell assembly 100 in a direction perpendicular to the stacking direction of the battery cells and the first insulating members. In an embodiment, the second insulating member 200 may be formed to cover at least a portion of one end of the battery cell assembly 100 in direction perpendicular to a direction in which electrode tabs of the battery cells protrude and in the stacking direction of the battery cells and the first insulating members. For example, based on the direction shown in FIG. 1, it may be formed to cover an upper portion of the battery cell assembly 100. In an embodiment, the second insulating member 200 may be located between the upper case 300 and the battery cell assembly 100.

The upper case 300, the lower case 400, and the end plate 500 may each protect the internal battery cell assembly 100 and impart rigidity to the secondary battery module 1000. The upper case 300 may be spaced apart from the second insulating member 200 above electrode tabs of the battery cells, and thus, an empty space may be secured between the second insulating member 200 and the upper case 300 above the electrode tabs of the battery cells. A fire extinguishing member 600 may be located in the empty space between the second insulating member 200 and the upper case 300.

In FIG. 1, the upper case 300, the lower case 400, and the end plate 500 are shown as separate parts, but may refer to different parts in one integrated case. The shape of the case that accommodates the battery cell assembly inside may be prismatic, cylindrical and/or pouch, but is not limited to a specific shape.

In addition, the secondary battery module 1000 may include an electrolyte provided with the battery cell assembly in the case. The electrolyte may be a non-aqueous electrolyte. The electrolyte may include lithium salts and organic solvents.

According to an embodiment, the organic solvent may include one of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

Terms indicating directions such as upper, lower, front, and side may vary depending on the location of an observer or the shape of the target. However, in the present specification, for convenience of description, based on the form shown in FIG. 1, directions such as upper, lower, front, side, and the like, will be distinguished and indicated. In an embodiment, based on the battery cell, it may be defined that the direction in which the battery cells are stacked is the front, the direction in which the electrode tabs of the battery cells protrude is the side, the direction in which the second insulating member is located is the upper, and the direction opposite to the direction in which the second insulating member is located is the lower.

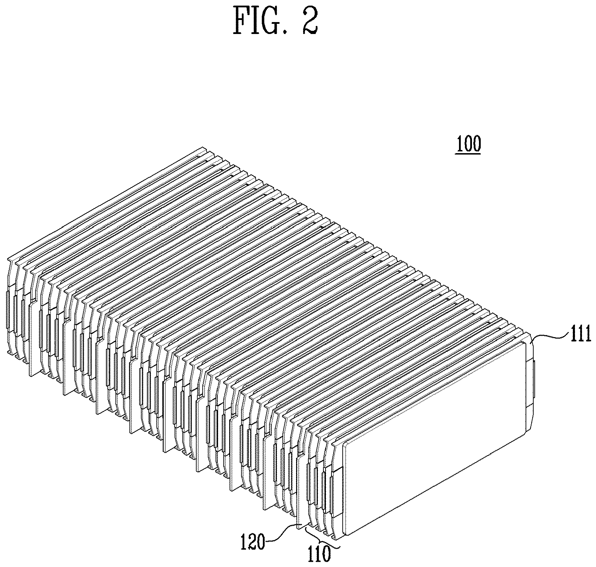

FIG. 2 is a diagram for explaining a battery cell assembly in a secondary battery module in accordance with an embodiment of the present disclosure.

Referring to FIG. 2, the battery cell assembly 100 may include a plurality of battery cell stacks 110 and one or more first insulating members 120. The battery cell stack 110 may include a plurality of stacked battery cells 111.

The battery cell 111 may include one or more electrode assemblies for secondary batteries. The electrode assembly for the secondary battery may include a plurality of anode plates, a plurality of cathode plates, and a separator.

The cathode plate and the anode plate may include a current collector and an active material layer disposed on the current collector, respectively. For example, the cathode plate may include a cathode current collector and a cathode active material layer, and the anode plate may include an anode current collector and an anode active material layer.

The current collector may include a known conductive material in the range that does not cause a chemical reaction in the lithium secondary battery. For example, the current collector may include any one of stainless steel, Ni, Al, Ti, Cu, and alloys thereof, and may be provided in various forms such as film, sheet and/or foil, but is not limited thereto.

The active material layer includes the active material. For example, the cathode active material layer may include a cathode active material, and the anode active material layer may include an anode active material.

The cathode active material may be a material in which Li ions may be inserted and extracted. The cathode active material may be lithium metal oxide. For example, the cathode active material may be one of the following: lithium manganese oxides, lithium nickel oxides, lithium cobalt oxides, lithium nickel manganese oxides, lithium nickel cobalt manganese oxides, lithium nickel cobalt aluminum oxides, lithium iron phosphate compounds, lithium phosphate manganese compounds, lithium phosphate cobalt compounds, and lithium phosphate vanadium compounds, but is not necessarily limited to specific examples.

The anode active material may be a material in which Li ions may be stored and extracted. For example, the anode active material may be any one of the following: crystalline carbon, amorphous carbon, carbon composite, carbon fiber or other carbon-based material, lithium alloy, Si, and Sn. According to an embodiment, the anode active material may be natural graphite or artificial graphite, but is not limited to a specific example.

The cathode plate and the anode plate may further comprise a binder and a conductive material, respectively.

The binder may mediate the bond between the current collector and the active material layer, thereby improving mechanical stability. According to an embodiment, the binder may be an organic binder or a water-based binder and may be used with a thickener such as carboxymethyl cellulose (CMC). According to an embodiment, the organic binder may be any one of vinylidene fluoride-hexafluoropropylene copolymer (PVDF-co-HFP), polyvinylidene fluoride (PVDF), polyacrylonitrile, and polymethylmethancrylate, and the water-based binder may be styrene-butadiene rubber (SBR), but is not necessarily limited thereto.

The conductive material may improve the electrical conductivity of the lithium secondary battery. The conductive material may include a metal-based material. According to an embodiment, the conductive material may include a conventional carbon based conductive material. For example, the conductive material may include any one of graphite, carbon black, graphene, and carbon nanotubes. Specifically, the conductive material may include carbon nanotubes.

In addition, the electrode assembly for the secondary battery may further include a cathode tab extending from the cathode plate and an anode tab extending from the anode plate. In an embodiment, the cathode tab and anode tab may protrude in a direction perpendicular to the direction in which the separator is folded from each of the cathode plate and anode plate, i.e., in the longitudinal direction. The cathode tab and anode tab may protrude in the same direction along the longitudinal direction or in opposite directions along the longitudinal direction.

The separator may be disposed between the cathode plate anode plate. The separator is configured to prevent an electrical short circuit between the cathode plate and the anode plate and to generate a flow of ions.

According to an embodiment, the separator may include a porous polymer film or a porous nonwoven fabric. Here, the porous polymer film may be composed of a single layer or multiple layers, including polyolefin-based polymers such as ethylene polymers, propylene polymers, ethylene/butene copolymers, ethylene/hexene copolymers, and ethylene/methacrylate copolymers. The porous nonwoven fabric may include glass fibers with a high melting point, polyethylene terephthalate fibers. However, it is not limited thereto, and according to an embodiment, the separator may be a ceramic coated separator (CCS) including ceramic.

The electrode tabs connected to the battery cell 111 may protrude in a direction perpendicular to both the up and down direction of the battery cell assembly and the stacking direction of the battery cell 111.

The first insulating member 120 may be located between the battery cell stacks 110 adjacent to each other to delay heat transfer between the battery cell stacks 110. Accordingly, among the plurality of battery cell stacks 110, heat transfer to neighboring battery cell stacks 110 may be delayed in a thermal propagation situation such as fire to any one battery cell stack 110. The first insulating member 120 may include a material that has low thermal conductivity at or above the event occurrence temperature of the battery cell 111, i.e., at 200 °C or more, specifically300 °C or more, maintains its shape, and has flame retardant properties. In an embodiment, the first insulating member 120 may include a material having a thermal conductivity of 0.3 W/mk or less at a temperature of 200°C or more, specifically 300°C or more. In addition, the first insulating member 120 may include a material whose weight is reduced by 30% or less compared to room temperature at a temperature of 200 °C or more, specifically 300 °C or more. In an embodiment, the weight of material may be reduced by 30% or less at a temperature of 200 °C. In addition, the first insulating member 120 may include a material that does not perforate on the surface when directly exposed to a flame or a gas of 200°C or more. The first insulating member 120 may include, for example, an aerogel, a polyurethane foam, mica, a silicon compound and a compound or mixture thereof, and may include them in the form of powder, fiber, or sheet material. In an embodiment, the first insulating member 120 may include an aerogel powder, an aerogel sheet, a silicone sheet, a polyurethane foam sheet, a mica sheet and/or a glass fiber, but is not limited thereto.

The first insulating member 120 may be formed to prevent a short circuit between the electrode tabs of the different battery cell stacks 110. For example, when the battery cell assembly 100 is viewed from the stacking direction, the cross-section of the first insulating member 120 may cover all of the cross-sections of the electrode tabs.

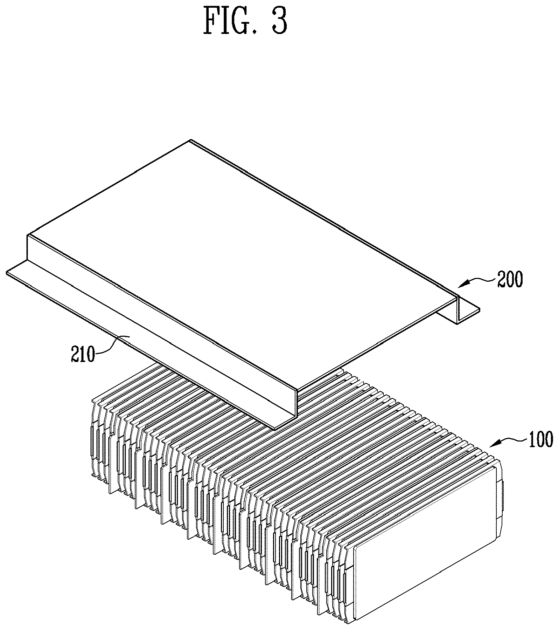

FIG. 3 is a diagram for explaining a second insulating member in a secondary battery module in accordance with an embodiment of the present disclosure.

Referring to FIG. 3, the second insulating member 200 may be located on the upper portion of the battery cell assembly 100. The second insulating member 200 may be formed to cover the upper portion of the battery cell assembly 100. The second insulating member 200 may include a material having relatively good flexibility to be formed to cover the upper portion of the battery cell assembly 100. In an embodiment, the second insulating member 200 may include a protruding part 210 protruding in the same direction as the protruding direction of the electrode tabs of the battery cells in the battery cell assembly 100. The protruding part 210 may be adjacent to the electrode tabs of the battery cells.

The second insulating member 200 may include a material that has low thermal conductivity at or above the event occurrence temperature of the battery cell 111, i.e., at 200 °C or more, specifically 300 °C or more, maintains its shape, has flame retardant properties, and has a low shrinkage rate due to moisture absorption. In an embodiment, the second insulating member 200 may include a material having a thermal conductivity of 0.3 W/mk or less at a temperature of 200 °C or more, specifically 300 °C or more. In addition, the second insulating member 200 may include a material whose weight is reduced by 30% or less compared to room temperature at a temperature of 200 °C or more, specifically 300°C or more. In an embodiment, the weight of material may be reduced by 30% or less at a temperature of 200 °C. In addition, the second insulating member 200 may include a material that does not perforate on the surface when directly exposed to a flame or a gas of 200 °C or more. In addition, the second insulating member 200 may include a material having a weight reduction rate of 5% or less when absorbing moisture. In addition, the second insulating member 200 covers the upper portion of the battery cell assembly 100 and may include a material having superior flexibility compared to the first insulating member, considering the shape that includes the protruding part 210. The second insulating member 200 may include, for example, silica wool, ceramic wool and/or mineral wool, but is not limited thereto.

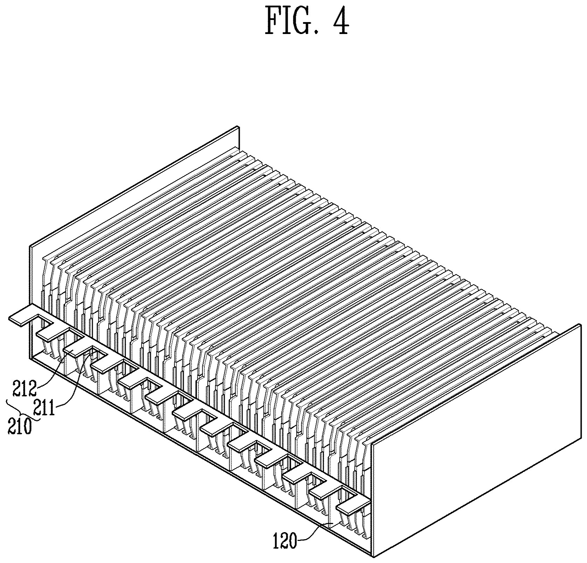

FIG. 4 is a diagram for explaining an example of a protruding part included in the second insulating member of FIG. 3.

The protruding part 210 may include a first portion 211 and a second portion 212. The length of the second portion 212 included in the protruding part 210 in a direction in which it protrudes may be longer than the length of the first portion 211 in a direction in which it protrudes. The first portion 211 may be located at the end of the battery cell stack. The second portion 212 may be located at the end of the first insulating member. Here, the end may refer to the end in the direction in which the electrode tab of the battery cell protrudes.

In other words, since the length of the first portion 211 located at the end of the battery cell stack is shorter than the length of the second portion 212 located at the end of the first insulating member, high-temperature gas generated from the battery cell stack may be easily moved to a space above the protruding part. In other words, by adjusting the shape of the protruding part 210, the movement path of the high temperature gas may be induced in a specific direction.

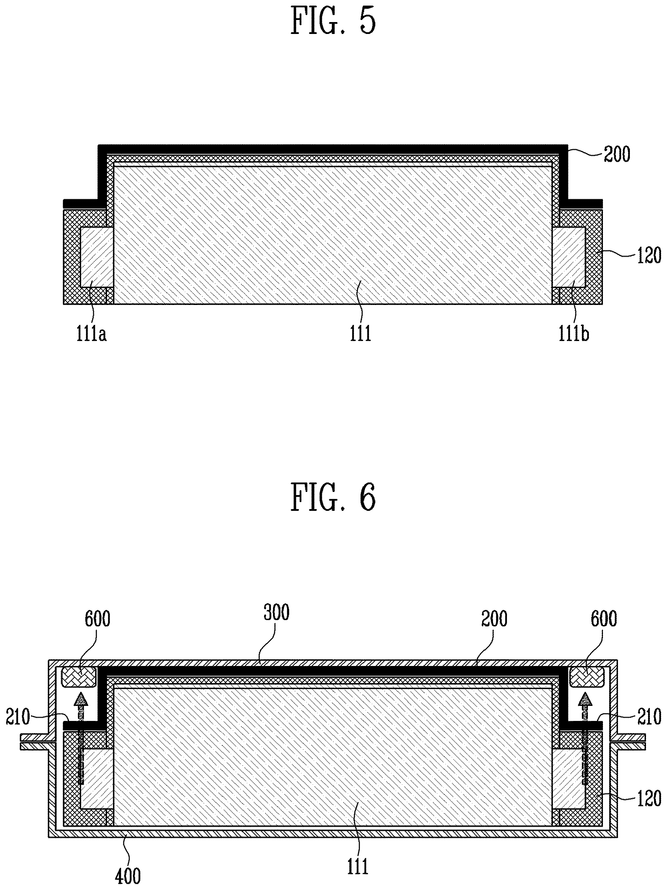

FIG. 5 is a cross-sectional view of a secondary battery module viewed from the front in accordance with an embodiment of the present disclosure.

Referring to FIG. 5, when viewed from the front, the cross-sections of the electrode tabs 111a and 111b of the battery cell 111 may all be covered by the cross-section of the first insulating member 120.

In addition, the second insulating member 200 may be formed to cover the upper portion of the battery cell 111 and the first insulating member 120.

FIG. 6 is a front view diagram for a secondary battery module including a fire extinguishing member in accordance with an embodiment of the present disclosure.

Referring to FIG. 6, the second insulating member 200 may be located above the battery cell 111 and the first insulating member 120. The lower case 400 may be located below the battery cell 111 and the first insulating member 120.

The upper case 300 may be located on the upper portion of the second insulating member 200. At the location where the protruding part 210 of the second insulating member 200 is formed, the upper case 300 may be formed to be spaced apart from the protruding part 210. Accordingly, an empty space may be formed between the protruding part 210 and the upper case 300.

The fire extinguishing member 600 may be located between the second insulating member 200 and the upper case 300. In an embodiment, the fire extinguishing member 600 may be located in the empty space between the protruding part 210 and the upper case 300. The fire extinguishing member 600 may include various types of fire extinguishing agents capable of extinguishing fire. In an embodiment, the fire extinguishing member 600 may be a configuration that releases a fire extinguishing agent when the internal temperature is above a predetermined temperature. For example, the fire extinguishing member 600 may have a fire extinguishing capsule containing a fire extinguishing agent expanding in response to external heat, and as an example of a fire extinguishing agent, powder form of inorganic carbonate, inorganic phosphate, and/or inorganic sulfate may be used, but is not limited thereto. Alternatively, the fire extinguishing agent may be a material that releases a fire extinguishing gas at a high temperature, for example, the fire extinguishing gas may be carbon dioxide, nitrogen or nitrogen oxides. The fire extinguishing member 600, however, is not limited to the above examples.

As described in FIG. 4, the high temperature gas generated from any one battery cell stack may move through the second insulating member 200 to the space between the second insulating member 200 and the upper case 300. When the temperature of the space between the second insulating member 200 and the upper case 300 increases above a predetermined temperature due to the high temperature gas, the fire extinguishing member 600 located in the space between the second insulating member 200 and the upper case 300 may operate.

The space between the second insulating member 200 and the upper case 300 may be formed to extend along the stacking direction of the battery cell 111, and the fire extinguishing member 600 may also be formed to extend along the stacking direction of the battery cell 111.

The high temperature gas moves along the space between the second insulating member 200 and the upper case 300 extending along the stacking direction of the battery cells 111, and due to the operation of the fire extinguishing member 600 during this process, the temperature of the high temperature gas may be lowered. Therefore, the high temperature heat generated in any battery cell stack 110 may be prevented from being transferred to other battery cell stacks 110.

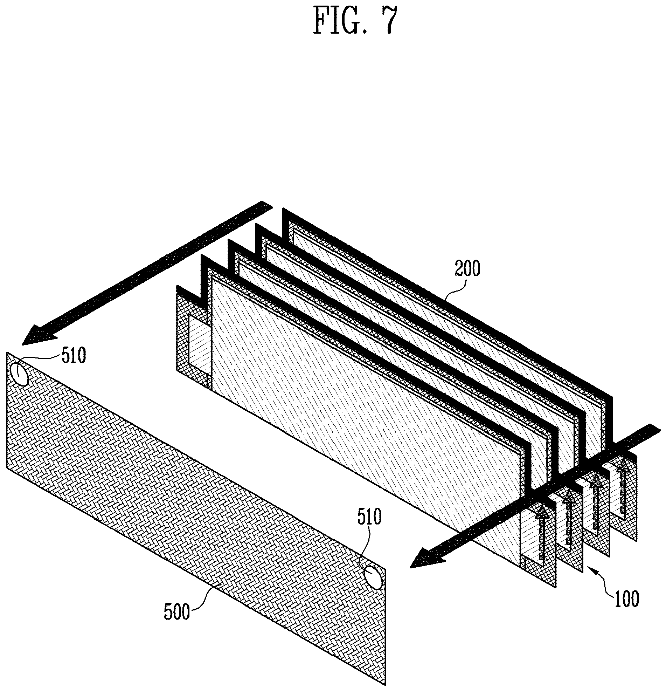

FIG. 7 is a diagram for explaining a movement path of gas in a secondary battery module in accordance with an embodiment of the present disclosure.

Referring to FIG. 7, a high temperature gas generated in the battery cell stack 110 of the battery cell assembly 100 may rise upward past the second insulating member 200. As described in FIG. 6, the high temperature gas may move to the space between the second insulating member 200 and the upper case 300 (as shown in FIG. 6) on the second insulating member 200. The high-temperature gas may be induced to move along the space between the second insulating member 200 extending in the stacking direction and the upper case 300 (as shown in FIG. 6). When the temperature of the space between the second insulating member 200 and the upper case 300 (as shown in FIG. 6) in the process of moving the gas is above a predetermined temperature, the fire extinguishing member 600 (as shown in FIG. 6) may operate to lower the temperature of the gas.

The end plate 500 may be located at the end of the battery cell assembly 100 in the cell stacking direction. The end plate 500 may include a venting hole 510 through which gas may be vented. The venting hole 510 may be formed adjacent to the space between the second insulating member 200 and the upper case 300 (as shown in FIG. 6). According to the venting hole 510, the space between the outside of the secondary battery module and the second insulating member 200 and the upper case 300 (as shown in FIG. 6) may communicate. Therefore, the gas moving along the space between the second insulating member 200 and the upper case 300 (as shown in FIG. 6) may be discharged to the outside of the secondary battery module through the venting hole 510 of the end plate 500.

According to an embodiment of the present disclosure, a battery pack including a battery pack case and the secondary battery module accommodated in the battery pack case may be provided.

The above description of the secondary battery module may be applied to all battery packs according to embodiments of the present disclosure. One or more secondary battery modules may be accommodated in a battery pack case.

In one embodiment, the battery pack case may include a tray and a pack cover, but the battery pack case is not limited to a particular configuration.

The battery pack may include electrical equipment mounted around the battery module in addition to the secondary battery module. The electrical equipment includes a battery management system (BMS) that monitors and controls the operation of the battery module, a battery disconnection unit (BDU) that controls the electrical connection of the battery module, a fuse located between the battery module and the BMS and provides an overcurrent blocking function.

In addition, the device according to an embodiment of the present disclosure may include the battery pack.

For example, the device may be an electric bicycle, an electric vehicle, a hybrid vehicle, and the like, but is not limited thereto and may be applied to various devices capable of using a battery module and a battery pack including the battery module.

While the present disclosure has been shown and described with reference to certain exemplary embodiments thereof, it will be understood by those skilled in the art that various changes in form and details may be made therein without departing from the spirit and scope of the present disclosure as defined by the appended claims and their equivalents. Therefore, the scope of the present disclosure should not be limited to the above-described exemplary embodiments but should be determined by not only the appended claims but also the equivalents thereof.

In the above-described embodiments, all steps may be selectively performed or part of the steps and may be omitted. In each embodiment, the steps are not necessarily performed in accordance with the described order and may be rearranged. The embodiments disclosed in this specification and drawings are only examples to facilitate an understanding of the present disclosure, and the present disclosure is not limited thereto. That is, it should be apparent to those skilled in the art that various modifications can be made on the basis of the technological scope of the present disclosure.

Meanwhile, the exemplary embodiments of the present disclosure have been described in the drawings and specification. Although specific terminologies are used here, those are only to explain the embodiments of the present disclosure. Therefore, the present disclosure is not restricted to the above-described embodiments and many variations are possible within the spirit and scope of the present disclosure. It should be apparent to those skilled in the art that various modifications can be made on the basis of the technological scope of the present disclosure in addition to the embodiments disclosed herein.

## Claims

1. A secondary battery module comprising:
a battery cell assembly in which a plurality of battery cells and one or more first insulating members are stacked;
a second insulating member formed to cover at least a portion of one end of the battery cell assembly in a direction perpendicular to a stacking direction of the battery cells and the one or more first insulating members;
an upper case located on the second insulating member; and
a fire extinguishing member located between the second insulating member and the upper case.

2. The secondary battery module of claim 1, wherein the one or more first insulating members are adjacent to corresponding one or more of the battery cells in the stacking direction.

3. The secondary battery module of claim 2, wherein the one or more of the battery cells are located between the one or more first insulating members different from each other.

4. The secondary battery module of any of the preceding claim, wherein the second insulating member is formed to cover at least a portion of one end of the battery cell assembly in a direction perpendicular to a direction in which electrode tabs of the battery cells protrude and in the stacking direction.

5. The secondary battery module of any of the preceding claim, wherein the one or more first insulating members comprise one or more materials selected from a group consisting of aerogel, polyurethane, mica, and silica.

6. The secondary battery module of any of the preceding claim, wherein the second insulating member comprises one or more materials selected from a group consisting of silica wool, ceramic wool, and mineral wool.

7. The secondary battery module of any of the preceding claim, wherein the second insulating member comprises a protruding part protruding in a same direction as a direction in which electrode tabs of the battery cells in the battery cell assembly protrude.

8. The secondary battery module of claim 7, wherein the protruding part comprises:
a first portion located at an end of the battery cells; and
a second portion located at an end of the one or more first insulating members and having a longer length than the first portion in the direction in which it protrudes.

9. The secondary battery module of claim 7, wherein the protruding part is spaced apart from the upper case.

10. The secondary battery module of claim 9, wherein the secondary battery module further comprises an end plate at an end of the battery cell assembly in the stacking direction.

11. The secondary battery module of claim 10, wherein the end plate comprises a venting hole.

12. The secondary battery module of claim 11, wherein a space between the protruding part and the upper case communicates with an outside of the secondary battery module through the venting hole.

13. The secondary battery module of any of the preceding claim, wherein the fire extinguishing member is configured to release a fire extinguishing agent when an internal temperature of the secondary battery module is higher than a predetermined temperature.

14. A battery pack comprising:
a battery pack case; and
the secondary battery module of claim 1 accommodated in the battery pack case.

15. A secondary battery module comprising:
a battery cell assembly including a plurality of battery cell stacks and a plurality of first insulating members, the first insulating members being interposed between neighbors of the battery cell stacks;
a plurality of second insulating members including a protruding part and partially covering the battery cell assembly;
an upper case and a lower case partially covering the battery cell assembly;
a plurality of fire extinguishing members extending in the stacking direction of the battery cell stacks and disposed between the upper case and the protruding part.
